# FASCICULE DE BREVET EUROPEEN

(11) **EP 1 274 539 B1**
(45) Date de publication et mention de la délivrance du brevet: **06.07.2005**
(21) Numéro de dépôt: 01925633.8
(22) Date de dépôt: 12.04.2001
(51) Int. Cl.: B23Q 37/00, B25B 11/00, B25J 15/04

(54) **DISPOSITIF DE SUPPORT PNEUMATIQUE D'UN ORGANE DE TRAVAIL AMOVIBLE**
MIT LUFT ANGETRIEBENE TRAGEVORRICHTUNG FÜR EIN BEWEGLICHES ARBEITSORGAN
DEVICE FOR PNEUMATIC SUPPORT OF A DETACHABLE WORKING MEMBER

(30) Priorité: 17.04.2000 FR 0004917
(43) Date de publication de la demande: 15.01.2003
(73) Titulaire: ORGANISATION EUROPEENNE POUR LA RECHERCHE NUCLEAIRE (CERN), 1211 Geneve 23 (CH)
(72) Inventeur: LABBE, Jean-Claude, F-74140 Chens sur Leman (FR)
(74) Mandataire: Gorree, Jean-Michel
(86) Numéro de dépôt international: PCT/FR2001/001135
(87) Numéro de publication internationale: WO 2001/078944

(56) Documents cités:
- GB-A- 1 599 751
- US-A- 4 664 588
- US-A- 4 676 142
- US-A- 5 782 571
- PATENT ABSTRACTS OF JAPAN vol. 013, no. 528 (M-898), 24 novembre 1989 (1989-11-24) & JP 01 216785 A (FUJITSU LTD), 30 août 1989 (1989-08-30)
- PATENT ABSTRACTS OF JAPAN vol. 018, no. 359 (E-1574), 6 juillet 1994 (1994-07-06) & JP 06 097213 A (HITACHI LTD), 8 avril 1994 (1994-04-08)

## Description

La présente invention concerne des perfectionnements apportés aux dispositifs de support d'un organe de travail amovible par effet d'aspiration pneumatique.

On connaît de nombreuses réalisations de tels dispositifs qui permettent d'utiliser une panoplie d'outils interchangeables montables sur un porte-outil et solidarisés sur celui-ci par effet pneumatique; par exemple dans le document JP 01 216 785 A.

Un inconvénient majeur des dispositifs connus réside dans le fait qu'ils ne sont pas agencés pour présenter une sécurité de positionnement vertical de l'organe de travail meilleure que le micron.

Un autre inconvénient réside dans le fait que ces dispositifs connus sont agencés pour supporter des outils d'une même gamme (par exemple ayant des diamètres ou des largeurs diverses), ou des outils qui ont des fonctions voisines (par exemple des outils pour enlèvement de matière). Par contre aucun de ces dispositifs connus n'est agencé pour recevoir des organes de travail à fonctions très diverses qui puissent équiper à la demande par exemple l'extrémité d'un bras manipulateur et qui éventuellement, de leur côté, puissent mettre en oeuvre une fonction faisant appel à un effet pneumatique.

Un autre inconvénient des dispositifs connus réside dans le fait qu'ils sont dédiés à des appareils prédéterminés pour lesquels et en fonction des caractéristiques desquels ils sont structurellement conçus et dans lesquels ils sont, souvent, structurellement incorporés.

L'invention a donc pour but de proposer un dispositif de support pneumatique d'un organe de travail amovible qui soit plus universel que les dispositifs actuellement connus, c'est-à-dire qui soit agencé pour pouvoir équiper des appareils non spécifiquement dédiés à l'origine, qui puisse accueillir des outils de travail à fonctions très diverses, y compris des outils mettant en oeuvre eux-mêmes un effet pneumatique, et qui présente une précision très élevée dans le positionnement, notamment vertical, de l'outil de travail.

A ces fins, un dispositif de support pneumatique d'un organe de travail amovible, étant agencé conformément à l'invention, comprend :
a) un support de tête comportant :
   - une embase fixable à un support,
   - un flotteur abrité dans un alésage central axial de ladite embase dans lequel ledit flotteur est susceptible d'un débattement axial limité par des moyens de butée extrêmes, ledit flotteur étant pourvu au moins d'un conduit axial qui est raccordable à une source pneumatique sous pression et qui débouche dans une face frontale du flotteur, et
   - une gorge annulaire creusée dans une face frontale de l'embase, entourant ledit alésage et raccordable à une source de vide ;
b) une tête interchangeable comportant :
   - un corps présentant une face frontale propre à coopérer avec la susdite face frontale de l'embase du support de tête et dans laquelle est prévue une zone annulaire d'appui en correspondance avec ladite gorge annulaire de l'embase du support de tête,
   - un pointeau disposé dans un alésage central axial dudit corps et apte à un débattement axial limité dans ledit alésage, ledit pointeau étant situé en correspondance de sensible coaxialité avec le susdit flotteur,
   - un organe de travail supporté par ledit pointeau, et
   - des moyens de suspension élastique interposés entre ledit pointeau et/ou l'organe de travail, d'une part, et le corps, d'autre part, qui sont propres à autoriser un déplacement axial dudit pointeau et de l'organe de travail mais à interdire leur déplacement transversal ;
c) des premiers moyens d'étanchéité annulaires interposés entre le flotteur et le pointeau et supportés par ledit flotteur et/ou ledit pointeau ;
d) des seconds moyens d'étanchéité annulaires interposés entre l'embase de support de tête et le corps de la tête et situés de part et d'autre de ladite gorge, et supportés par ladite embase et/ou par ledit corps ; et
e) des moyens de centrage supportés par le support de tête et/ou par la tête pour positionner la tête coaxialement au support de tête lorsqu'elle est accouplée pneumatiquement à ce dernier.

Grâce aux dispositions précitées, on dispose d'un dispositif de support pneumatique d'un outil de travail amovible qui peut être monté facilement sur un appareil : en effet l'embase du support de tête peut être conformée pour être facilement adaptable à la morphologie structurelle d'un appareil particulier afin d'être fixée sur celui-ci ; en particulier cette embase peut comporter une partie formant platine de fixation et c'est alors la géométrie de cette platine de fixation qui, seule, doit être adaptée à l'appareil, le reste de l'embase demeurant inchangé. Il serait du reste parfaitement envisageable de constituer cette platine de fixation sous forme d'une pièce distincte du reste de l'embase, usinée à la demande en fonction de l'appareil à équiper et fixable par exemple par vissage sur le reste de l'embase. Dans ces conditions, non seulement le dispositif de l'invention peut équiper des appareils nouvellement conçus, mais en outre il peut équiper des appareils anciens déjà en service grâce à une adaptation adéquate de l'embase, et notamment de la partie de celle-ci formant platine de fixation ; au surplus le dispositif de l'invention peut être monté sur des appareils non initialement prévus à cet effet.

De plus, le dispositif est pourvu d'un double circuit pneumatique, un circuit étant dédié à la solidarisation de la tête interchangeable sur le support de tête et l'autre circuit associé au flotteur du support de tête étant disponible pour le cas où l'organe de travail est propre à mettre en oeuvre un effet pneumatique.

De préférence, on prévoit dans ce dispositif des moyens de contact électrique dans l'alésage central de l'embase, qui sont agencés pour être actionnés par le flotteur lorsque l'ensemble formé par le flotteur, le pointeau et l'organe de travail est repoussé axialement lors de la venue de l'organe de travail en butée contre un obstacle. De la sorte, on peut obtenir une très grande sécurité de fonctionnement et une très grande précision dans le positionnement, notamment vertical, de l'organe de travail. En particulier, on peut concevoir que les moyens de contact électrique soient constitués sous forme d'une membrane, ou de plusieurs membranes déformables parallèles à faces électriquement conductrices qui sont déplaçables par le flotteur pour venir au contact les unes des autres lorsque l'organe de travail vient au contact d'une surface de travail ; on peut ainsi établir une fonction de la coupure de commande de déplacement (fonction de fin de course), éventuellement associée, par multiplication du nombre des membranes, à d'autres fonctions telle qu'une fonction de coupure d'alimentation électrique de second niveau (sécurité) si la fonction précitée n'a pas été déclenchée.

Lorsque l'organe de travail doit pouvoir être orienté dans une position définie par rapport à la surface avec laquelle il doit coopérer, il est souhaitable de prévoir des moyens de positionnement angulaire mutuel du support de tête et de la tête interchangeable.

Dans un mode de réalisation préféré, les moyens de suspension élastique comprennent une feuille d'un matériau inextensible, présentant une relative déformabilité transversale, tendue entre le corps de la tête, d'une part, et le pointeau et/ou l'organe de travail, d'autre part ; en particulier, il est intéressant que les moyens de suspension élastique soient constitués par une feuille en matériau synthétique inextensible et présentant une relative déformabilité transversale, tels que ceux connus sous les dénominations Kevlon ou Mylar, qui sont légers et peuvent se présenter sous forme de bandes ou feuilles très minces tout en possédant une bonne résistance mécanique.

Dans un exemple de mise en oeuvre très intéressant, l'organe de travail est un organe de préhension d'objet qui comprend une platine de saisie solidaire de l'extrémité du pointeau, au moins une ventouse disposée sur la face inférieure de la platine et au moins un canal dans la platine pour relier ladite ventouse au pointeau ; dans ce cas, la platine peut avantageusement être un plateau dont la forme est en conformité avec la forme et les dimensions de l'objet à déplacer et qui présente sur sa face inférieure une multiplicité de ventouses reliées par des canaux respectifs au susdit pointeau. Dans ce contexte, on peut donc prévoir une multiplicité d'organes de préhension d'objet tous identiques dont leur conception structurelle et fonctionnelle, mais tous différents par la forme de leur platine qui est adaptée à la forme de l'objet à saisir et à déplacer, et/ou par les dimensions qui sont en relation avec les dimensions et le poids de l'objet à saisir et à déplacer, et/ou par le nombre de ventouses qui sont en relation avec l'étendue de la platine (et donc les dimensions de l'objet) et le poids de l'objet à saisir.

Dans un autre exemple de mise en oeuvre possible du dispositif de l'invention, l'organe de travail peut être un doigt de contact mécanique terminant le pointeau, ce grâce à quoi le dispositif, par exemple couplé avec des moyens de détermination de course, permet de mesurer une dimension d'une pièce, telle que son épaisseur (mesure axiale) ou sa longueur/largeur, ou le diamètre d'un alésage. La fonction de mesure de dimension est rendue possible par la mise en oeuvre de moyens de contact électrique soit associés au flotteur, soit inclus dans la tête amovible, moyens dont la conception par exemple sous forme de membranes déformables à surfaces conductrices procure une très grande sensibilité et autorise des mesures de dimensions aussi fines que le micron.

Dans encore un autre exemple de mise en oeuvre possible du dispositif de l'invention, l'organe de travail peut être une seringue propre à délivrer un produit coulant. Dans une réalisation concrète, un tel organe de travail comporte
- une embase auxiliaire flottante mécaniquement solidarisée à la susdite embase du support de tête latéralement à celle-ci, ladite embase auxiliaire comportant un conduit raccordable à une source pneumatique sous pression,
- un corps auxiliaire mécaniquement solidarisé au susdit corps de la tête interchangeable latéralement à celle-ci, ledit corps auxiliaire comportant un conduit débouchant dans la partie supérieure de la seringue,
- et des moyens d'étanchéité pour assurer la liaison étanche entre le conduit de l'embase auxiliaire et le conduit du corps auxiliaire lorsque lesdits embase et corps auxiliaires sont assemblés.

Il est ainsi possible de commander pneumatiquement le refoulement d'un produit coulant contenu dans la seringue. Il est alors souhaitable que l'embase auxiliaire flottante comporte en outre un conduit raccordable à une source de vide et que le corps auxiliaire présente, en regard de l'orifice du conduit de vide l'embase auxiliaire, une portée d'appui étanche pour ledit orifice, de sorte que le corps auxiliaire soit solidarisé à l'embase auxiliaire par effet de vide en même temps que le susdit corps de la tête l'est à la susdite embase du support de tête.

Le dispositif conforme à l'invention est d'une grande universalité de mise en oeuvre puisque de nombreux organes de travail peuvent être conçus dans le contexte de la structure de base qui a été indiquée plus haut.

Pour fixer les idées, le dispositif de l'invention peut trouver par exemple une application pour la manipulation de pastilles de silicium de grandes dimensions. Ces pastilles, très minces, sont d'une extrême fragilité et leur manipulation à la main ou à l'aide de pince conduirait à leur rupture. Un dispositif conforme à l'invention peut éviter cet inconvénient et, installé à l'extrémité d'un bras manipulateur (les opérations se déroulant en enceinte close) et associé à une collection d'organes de travail de types divers, il permet d'assurer le déplacement des pastilles de silicium, l'encollage d'un support de réception, la mise en place précise de la pastille de silicium sur ce support et son maintien jusqu'à durcissement de la colle, la mise bout à bout sur le support de deux ou plusieurs pastilles de silicium avec une précision de positionnement de l'ordre du dixième de micron et leur encollage, etc.

De même, il est possible d'adapter les divers éléments constitutifs pour réaliser des dispositifs aptes à saisir des objets très légers de l'ordre du gramme ou encore moins, aussi bien que des dispositifs aptes à saisir des objets très lourds de plusieurs tonnes.

L'invention sera mieux comprise à la lecture de la description qui suit de certains modes de réalisation donnés uniquement à titre d'exemples non limitatifs. Dans cette description on se réfère aux dessins annexés sur lesquels :
- les figures 1 et 2 illustrent un mode de réalisation d'un dispositif agencé conformément à l'invention en vue d'assurer une fonction de préhension d'objet, ce dispositif étant montré respectivement dans deux positions, respectivement non fonctionnelle et fonctionnelle ;
- la figure 3 illustre, en coupe, une tête agencée selon l'invention pour une mesure dimensionnelle axiale (mesure d'épaisseur) ;
- la figure 4 illustre, en coupe, une tête agencée selon l'invention pour des mesures dimensionnelles axiales et transversales ; et
- la figure 5 illustre, en coupe, un mode de réalisation d'un dispositif agencé selon l'invention en vue d'assurer une fonction de distribution, par voie pneumatique, d'un produit coulant.

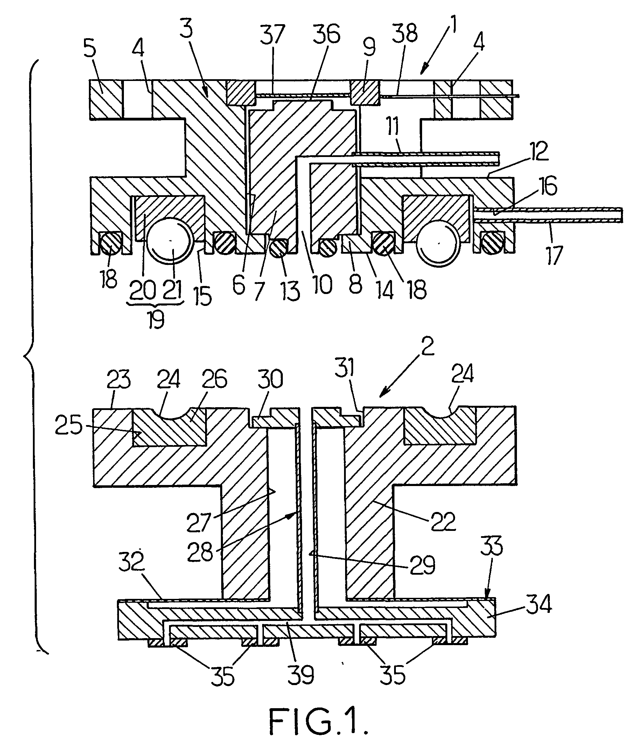

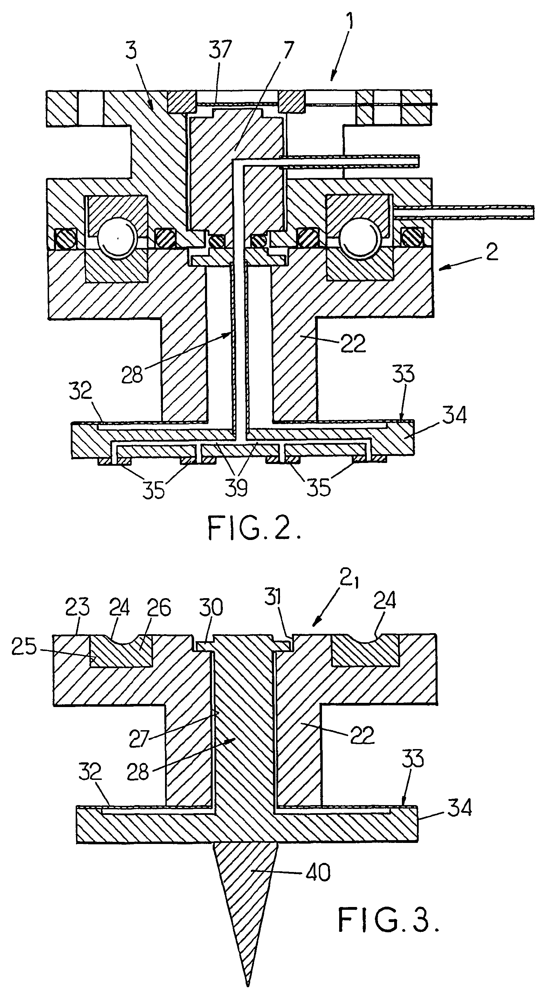

En se reportant tout d'abord plus particulièrement à la figure 1, ainsi qu'à la figure 2, un dispositif agencé conformément à l'invention comprend essentiellement un support de tête 1 et une tête interchangeable 2.

Le support de tête 1 comporte une embase 3 fixable à un support (non montré) tel qu'un appareil mobile (chariot, bras manipulateur, colonne ou autre). L'embase 3 comporte, à sa partie supérieure, des moyens de fixation 4 propres à permettre son montage et sa fixation sur le support et ces moyens de fixation 4 peuvent être adaptés à des supports spécifiques pour étendre l'universalité d'utilisation du dispositif. Dans l'exemple illustré, les moyens de fixation 4 sont simplement des trous aptes à recevoir des vis ou des boulons de fixation, mais ils peuvent être agencés différemment (épaulements de positionnement, doigts de guidage pour le montage, ...).

Au surplus, on remarquera que les moyens de fixation 14 sont prévus dans une partie supérieure de l'embase qui est en forme de platine de fixation 5. L'adaptation de l'embase en conformité avec les divers supports susceptibles de la recevoir consiste essentiellement en l'adaptation de cette platine de fixation 5, le reste de l'embase et du support de tête pouvant demeurer inchangé. Pour simplifier les modalités de ces adaptations, on pourrait prévoir de réaliser la platine de fixation 5 sous forme d'une pièce indépendante fixable à la partie restante de l'embase 3.

L'embase 3 est traversée par un alésage central axial 6 dans lequel est abrité un corps libre ou flotteur 7 susceptible d'un débattement axial limité par des moyens de butée extrêmes tels que 8 (rebord inférieur saillant radialement dans l'alésage) et 9 (bague rapportée à l'orifice supérieur de l'alésage).

Le flotteur 7 est traversé par un conduit axial 10 débouchant inférieurement axialement dans la face inférieure du flotteur et, dans le mode de réalisation représenté, débouchant à son autre extrémité sur la paroi latérale du flotteur où il reçoit un tube 11 de raccordement à une source de fluide pneumatique sous pression (positive, nulle ou négative selon les phases de fonctionnement). Pour laisser une possibilité de libre débattement au tuyau 11, l'embase est évidée, à cet endroit, en une lumière 12 allongée verticalement.

Autour de l'orifice du conduit 10, la face inférieure du flotteur 7 est équipée d'un joint d'étanchéité annulaire écrasable 13 qui fait partiellement saillie au-delà de la face frontale ou inférieure 14 de l'embase 3.

Enfin l'embase 3 est pourvue d'une gorge annulaire 15 creusée dans sa face frontale 14 et entourant l'alésage 6. Cette gorge 15 peut suivre la périphérie de la face frontale 14 de l'embase et en épouser la forme (par exemple circulaire si l'embase est de révolution, ou quadrangulaire si l'embase est carrée ou rectangulaire).

En un ou plusieurs emplacements de la gorge 15 débouchent respectivement un ou plusieurs canaux 16 raccordés par des tubes 17 à une source de vide (non montrée).

De part et d'autre de la gorge 15, la face frontale 14 de l'embase est équipée respectivement de deux joints annulaires écrasables 18 en saillie partielle par rapport à la face 14.

Pour que la tête interchangeable 2 soit assemblée coaxialement au support de tête, on prévoit des moyens 19 de positionnement coaxial mutuel. A cet effet on peut, d'une façon simple, disposer dans la gorge 15 une bague annulaire 20 retenant un certain nombre (par exemple trois, quatre) billes 21 partiellement saillantes vers le bas. Dans ce cas, la bague 20 n'occupe pas tout le volume de la gorge pour laisser une communication avec le ou les canaux 16 d'application du vide.

De son côté, la tête interchangeable 2 comporte un corps 22 présentant une face supérieure ou face frontale 23 propre à coopérer avec la face frontale 14 de l'embase 3 du support de tête 1. A cet effet, ladite face frontale 23 du corps 22 est conformée identiquement, en forme et en dimension, à la face frontale 14 de l'embase 3. De plus, elle comporte une zone annulaire d'appui, située en regard de la gorge 15 de l'embase 3, qui est conformée de manière à recevoir de façon étanche les joints 18, de sorte qu'entre les faces frontales 14 et 23 en vis-à-vis soit définie un volume annulaire étanche dans lequel le vide est établi (voir figure 2) et que la tête 2 soit assemblée au support de tête 1 sous l'action de ce vide.

Pour assurer le positionnement coaxial requis de la tête 2 et du support de tête 1, la face frontale 23 du corps 22 est agencée en conséquence. Dans l'exemple considéré d'un positionnement par billes, cette face frontale 23 présente une gorge annulaire 24 recevant les susdites billes 21. Pour simplifier la fabrication du corps 22, on peut prévoir une gorge 25 annulaire, creusée dans la face 23 en regard de la gorge 15 de l'embase 3 ; dans la gorge 25 est disposée une bague 26 qui, elle, est pourvue de la susdite gorge 24 de réception des billes 21.

Le corps 2 est pourvu d'un alésage central axial 27 dans lequel est disposée à libre coulissement axial une pièce mobile tubulaire dénommée ci-après pointeau tubulaire 28. Le pointeau tubulaire 28 est situé coaxialement au flotteur 7 de l'embase 3 lorsque la tête 2 est assemblée au support de tête 1 (voir figure 2) et son évidemment central 29 est alors en coïncidence avec le conduit axial 10 du flotteur 7.

Le guidage et la limitation de débattement axial du pointeau 28 dans l'alésage 27 sont obtenus par les moyens suivants.

A sa partie supérieure, un élargissement ou collerette 30 (éventuellement sous forme d'une pièce rapportée) du pointeau coopère librement avec un élargissement correspondant 31 de l'alésage.

A sa partie inférieure, des moyens de suspension élastique 32 sont interposés entre le pointeau 28 (ou un organe qui en est solidaire) et le corps 22. Ces moyens de suspension élastique 32 sont propres à autoriser le débattement axial du pointeau 28, mais à empêcher son déplacement radial. Comme illustré à la figure 1, les moyens de suspension élastique 32 peuvent avantageusement être constitués à cet effet sous forme d'une feuille mince solidarisée par ses bords, d'une part, au pointeau ou à un organe qui en est solidaire et, d'autre part, au corps 22. Cette feuille mince formant membrane élastique peut par exemple être en acier ou de préférence en une matière synthétique mécaniquement résistante telle que celles commercialisées sous les dénominations Kevlon, Mylar ou analogues.

A son extrémité inférieure saillant au-delà du corps 22, le pointeau 28 est solidaire d'un organe de travail 33 dont la constitution est définie par sa fonction.

Dans l'exemple des figures 1 et 2, l'organe de travail 33 est un organe de préhension d'objet qui comprend une platine 34 solidaire de l'extrémité du pointeau 28, une ou plusieurs ventouses 35 disposées sur la face inférieure de la platine 34 et un réseau de canaux 39 s'étendant au sein de la platine 34 pour raccorder chaque ventouse 35 à l'évidement central 29 du pointeau tubulaire 28. Les dimensions et la forme de la platine 34, ainsi que le nombre et la distribution des ventouses 35 sont fonction de l'objet devant être saisi et déplacé.

Dans cet exemple d'agencement, la membrane élastique de suspension 32 est interposée entre le corps 22 et la platine 34.

On comprendra que tous les organes d'étanchéité (joints 13 et 18) et de positionnement coaxial (pièces 19, 20, 21, 24, 25, 26) peuvent être disposés indifféremment sur le support de tête 1 ou sur la tête 2.

Pour certaines applications, il peut être nécessaire que la tête soit dans une position angulaire déterminée par rapport à l'appareil équipé du dispositif, et donc par rapport au support de tête. Dans ce cas, on prévoit des moyens de positionnement angulaire mutuel, ou de détrompage, sur la tête et sur le support de tête. Il peut s'agir de façon simple, d'un ou plusieurs doigts reçus dans des alésages de guidage (non montrés). Il peut également s'agir, simplement, des billes de centrage 21 reçues dans les évidements 24 constitués alors non plus sous forme d'une gorge annulaire, mais sous forme de cuvettes réparties sur le contour de la bague 26.

Lorsque la tête 2 et le support de tête 1 sont assemblés (figure 2), le pointeau 28 et le flotteur 7 sont solidaires l'un de l'autre et le fluide pneumatique (pression négative pour la saisie et le déplacement de l'objet à l'aide de la platine et des ventouses 35 ; pression nulle, voire positive pour déposer l'objet) est transmis par le conduit 10 du flotteur et l'évidement 29 du pointeau tubulaire 28 qui communiquent de façon étanche.

Le pointeau 28, dont est solidaire l'organe de travail 33, et le flotteur 7 constituent un ensemble monobloc susceptible d'un débattement axial à rappel élastique conféré par la membrane élastique 32. La mise au contact de l'organe de travail 33 avec l'objet à saisir s'effectue ainsi sans heurt et un objet fragile (tel qu'une pastille de silicium de grande dimension) ne risque pas d'être endommagé ou brisé.

Au surplus, il est possible de mettre à profit le léger retrait axial de l'ensemble mobile, lorsqu'il entre en contact avec l'objet à saisir, pour commander automatiquement l'arrêt du mouvement de l'appareil supportant le dispositif. A cet effet on peut associer au flotteur 7, notamment en regard de sa face arrière (ou supérieure) 36 un interrupteur de fin de course ou un agencement faisant office d'interrupteur de fin de course.

Compte tenu des faibles amplitudes de débattement de l'équipage mobile, on peut disposer, en regard de ladite face arrière 36 du flotteur 7, une membrane souple 37 ayant une face partiellement ou totalement métallisée et reliée par un fil électrique 38 à des moyens de commande du déplacement de l'appareil (non montrés). L'intervalle entre la face 36 du flotteur 7 au repos et la face métallisée de la membrane 37 peut être très faible, par exemple d'un ordre de grandeur du micron, ce qui confère une sensibilité très élevée à ce système de contact.

On peut en outre prévoir plusieurs membranes à faces métallisées les unes à la suite des autres, de manière à établir des sécurités, par exemple si la venue en contact du flotteur avec la première membrane n'a pas été suivie de l'arrêt du mouvement de descente du dispositif mis au contact de l'objet à saisir.

On peut aussi faire supporter à la membrane ou à certaines membranes un capteur approprié (par exemple capteur à effet Hall) propre à délivrer un signal dès que le flotteur 7 entre en contact avec la membrane.

Cette grande sensibilité du dispositif de l'invention peut être mise à profit pour effectuer des mesures dimensionnelles verticalement (par exemple de l'épaisseur d'une pièce) et/ou transversalement (par exemple mesure d'un diamètre d'alésage), en mettant en oeuvre une tête de conformation appropriée.

En se référant à la figure 3, la tête 2₁ est agencée, dans son ensemble, de la même manière que la tête 2 des figures 1 et 2 (les mêmes références numériques sont conservées pour désigner les pièces et parties identiques) à ceci près que la platine 34 et le pointeau 28 peuvent, ici, être pleins (absence des canaux 39 et de l'évidement central 29). Sur la face inférieure de la platine 34 est disposé axialement un doigt de contact 40 dirigé vers le bas. Un doigt pointu tel que le doigt 40 illustré à la figure 3 peut être amené verticalement au contact d'une pièce sous-jacente et permet donc d'effectuer une mesure d'épaisseur sur cette pièce posée sur un plateau de référence. La détection de la venue en contact du doigt 40 avec la pièce sous-jacente peut être assurée par la membrane 37 associée au flotteur 7, dans les conditions indiquées plus haut.

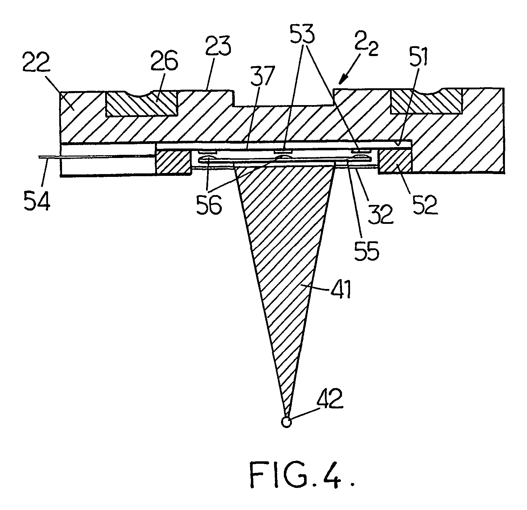

Le mode de réalisation de la figure 4, bien que n'étant pas couvert par les revendications, est utile à la compréhension de l'invention. Ce mode de réalisation est prévu pour effectuer non seulement des mesures verticales (mesure d'épaisseur notamment), mais également pour effectuer des mesures transversales (mesures de longueur/largeur, de diamètre d'alésage, ...). A cette fin, la tête 2₂ est équipée d'un doigt 41 qui se termine par une terminaison volumineuse telle qu'une boule sphérique 42.

Pour que le doigt 41 puisse être actif aussi bien verticalement que transversalement, le corps 22 est réalisé sous forme massive avec sa face supérieure 23 agencée et équipée comme le corps 22 de la tête 2 (figures 1 et 2). Inférieurement, le corps 22 présente une cavité axiale 51 dans laquelle une bague annulaire 52, fixée périphériquement dans cette cavité, supporte deux membranes :
- une première membrane 32 est interposée entre le doigt 41 et la bague 52 (et donc le corps 22 dont elle est solidaire), et elle constitue les moyens de suspension élastique propres à autoriser un mouvement vertical du doigt 41, mais à interdire son déplacement transversal ; on notera toutefois que, compte tenu de son mode de suspension, le doigt 41 est susceptible de basculer légèrement lorsque la sphère 42 vient au contact d'un obstacle ;
- une deuxième membrane 37 située parallèlement à la membrane 32 est fixée, en arrière de celle-ci, à la bague 52 ; la membrane 37 est munie, sur sa face inférieure, de contacts électriques 53, soit continus soit discontinus (par exemple à la figure 4 sont illustrés un contact individuel central et un contact périphérique annulaire) ; les contacts 53 sont raccordés soit ensemble, soit individuellement à un récepteur de signal extérieur (non montré) par l'intermédiaire d'un câble électrique 54.

Enfin, le doigt 41 est conformé ou est équipé de manière à présenter une partie discoidale 55 située entre les deux membranes, ladite partie discoidale 55 étant munie de contacts électriques 56 en vis-à-vis de ceux de la deuxième membrane 37 (en l'occurrence un contact central et un contact annulaire périphérique).

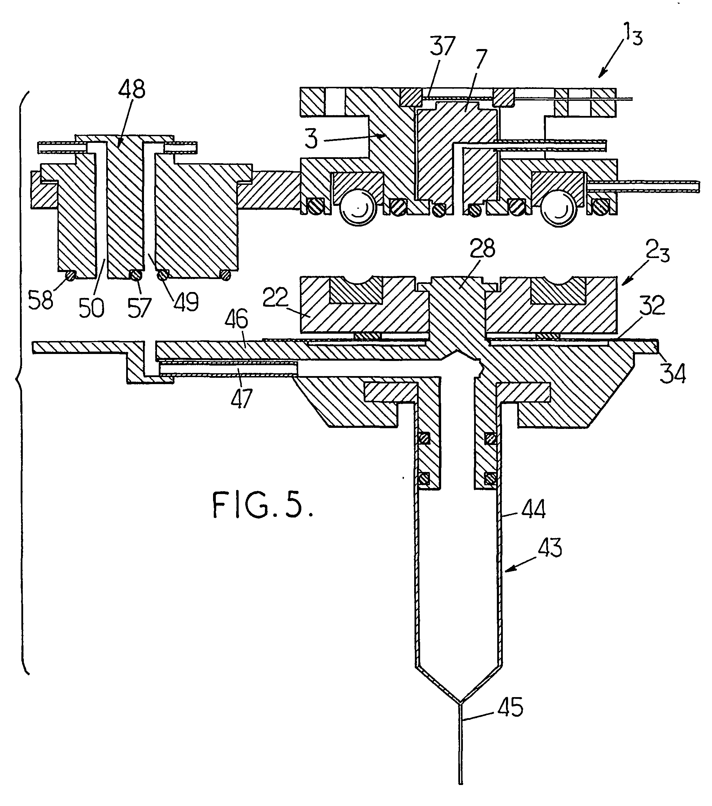

A la figure 5 est illustré encore un autre exemple de réalisation d'un support de tête et d'une tête interchangeable élaborés autour du support et de la tête de base des figures 1 et 2. Dans cet exemple, l'organe de travail est une seringue 43 agencée pour distribuer un produit coulant (par exemple de la colle).

A cet effet le corps de seringue 44 (qui est disposé verticalement et se termine inférieurement par l'aiguille distributrice 45) est solidaire de la platine 34, elle-même solidaire du pointeau 28. Ici, le pointeau 28 est réalisé sous forme pleine.

Pour le reste, le support de tête 1₃ et la tête 2₃ sont agencés comme illustré aux figures 1 et 2, les mêmes références numériques étant conservées pour désigner les organes identiques.

Pour assurer la distribution du produit coulant, on met en oeuvre des moyens pneumatiques. La platine 34 comporte un corps auxiliaire 46 formant une extension latérale (vers la gauche sur la figure 5) qui contient un canal 47 débouchant, d'un côté, dans le corps de seringue 44 en haut de celui-ci et, de l'autre côté, sur la face supérieure de l'extension 46.

De son côté, en regard de ladite extension 46, l'embase 3 du support de tête 1 est équipée d'une embase auxiliaire flottante 48 formant dispositif de raccord pneumatique double qui, sur sa face inférieure, est équipé des joints toriques 57, 58 nécessaires pour assurer l'étanchéité des liaisons avec la face supérieure du corps auxiliaire 46 de la tête 2₃. L'embase auxiliaire flottante 48 est traversé par deux canaux, l'un 49 débouchant en regard du canal 47 précité du corps auxiliaire 46 et sert à véhiculer un fluide sous pression à destination du corps de seringue 44 afin d'en chasser du produit coulant et l'autre 50 débouchant en regard de la face pleine du corps auxiliaire 46 et étant raccordé à une source de vide. Lorsque la tête 2₃ est accouplée au support de tête 1₃ comme indiqué plus haut en regard de la figure 2, le corps auxiliaire 46 est plaqué contre l'embase auxiliaire 48 sous l'effet du vide véhiculé par le canal 50, et les canaux 49 et 47 sont réunis de façon étanche pour la commande de la seringue 43.

Un organe de travail ainsi agencé permet de distribuer un produit coulant, tel que de la colle, avec une grande précision à la fois quant à la quantité de produit distribué et au séquencement de cette distribution et quant à l'emplacement où ce produit est déposé.

Il est bon de souligner que le montage souple verticalement (par le biais de la membrane 32) de la seringue 43 permet, grâce au contacteur associé à la membrane 37, de conférer une référence verticale de position. Cet agencement est d'importance car il permet de tenir compte des tolérances (variation de plusieurs dixièmes de millimètres) sur la longueur des seringues d'un même type. De plus, en utilisant un agencement de contacteurs associés à la membrane de support 32 tel que celui illustré à la figure 4, il serait également possible d'obtenir un référencement en X, Y dans un plan horizontal, ce qui conduit à une fiabilité de très haut niveau sur le positionnement de l'extrémité de l'aiguille 45 de la seringue 43.

De plus, d'autres organes flottants pourraient être adjoints au dispositif, en étant dirigés soit parallèlement à l'axe (c'est-à-dire parallèlement à l'embase flottante 48 précitée), soit radialement, afin d'assurer d'autres fonctions auxiliaires (par exemple contact électrique pour commander un appareil électrique adapté tel qu'une perceuse, ou un corps de chauffe (soudure), pour amener un flux d'air chaud, etc...). Dans le cas d'un système rotatif (perçage par exemple), des butées de positionnement seraient à prévoir.

Bien d'autres organes de travail peuvent, dans le cadre de la présente invention, être développés en combinaison avec la platine 34 suspendue par la membrane 32 au corps 22 de la tête.

On notera, ici, que le pointeau 28, quel que soit l'organe de travail qui lui est associé, sert également de butée. Par exemple, dans la configuration illustrée aux figures 1 et 2, lors de la saisie d'une pièce plus ou moins lourde, le pointeau 28, grâce à son élargissement ou collerette 30 prenant appui sur l'élargissement 31 de l'alésage, empêche la platine 34 de descendre de façon excessive sous l'influence du poids qu'elle supporte, et empêche donc la destruction de la membrane 32 positionnant ladite platine 34.

## Revendications

1. Dispositif de support pneumatique d'un organe de travail amovible, comportant un support de tête (1, 1₃) et une tête interchangeable (2, 2₁, 2₂, 2₃), **caractérisé en ce que** :
a) le support de tête (1, 1₃) comporte :
- une embase (3) fixable à un support,
- un flotteur (7) abrité dans un alésage central axial (6) de ladite embase (3) dans lequel ledit flotteur est susceptible d'un débattement axial limité par des moyens de butée extrêmes (8, 9), ledit flotteur (7) étant pourvu au moins d'un conduit axial (10) raccordable à une source pneumatique sous pression et débouchant dans une face frontale du flotteur, et
- une gorge annulaire (15) creusée dans une face frontale (14) de l'embase (3), entourant ledit alésage (6) et raccordable à une source de vide ;
b) la tête interchangeable (2, 2₁, 2₂, 2₃) comporte :
- un corps (22) présentant une face frontale (23) propre à coopérer avec la susdite face frontale (14) de l'embase (3) du support de tête (1, 1₃) et dans laquelle est prévue une zone annulaire en correspondance avec ladite gorge annulaire (15) de l'embase (3) du support de tête,
- un pointeau (28) disposé dans un alésage central axial (27) dudit corps (22) et apte à un débattement axial limité dans ledit alésage, ledit pointeau (28) étant situé en correspondance de sensible coaxialité avec le susdit flotteur (7),
- un organe de travail (33-35; 40; 41, 42; 43) supporté par ledit pointeau, et
- des moyens de suspension élastique (32) interposés entre ledit pointeau et/ou l'organe de travail, d'une part, et le corps, d'autre part, propres à autoriser un déplacement axial dudit pointeau et de l'organe de travail mais à interdire leur déplacement transversal ;
c) des premiers moyens d'étanchéité annulaires (13) sont interposés entre le flotteur (7) et le pointeau (28) et supportés par ledit flotteur et/ou ledit pointeau ;
d) des seconds moyens d'étanchéité annulaires (18) sont interposés entre l'embase (3) de support de tête et le corps (22) de la tête et situés de part et d'autre de ladite gorge, et supportés par ladite embase et/ou par ledit corps ; et
e) des moyens de centrage (19, 24) sont supportés par le support de tête et/ou par la tête pour positionner la tête coaxialement au support de tête lorsqu'elle est accouplée pneumatiquement à ce dernier.

2. Dispositif selon la revendication 1, **caractérisé en ce que** des moyens de contact électrique (36, 37) sont prévus dans l'alésage central de l'embase, qui sont agencés pour être actionnés par le flotteur (7) lorsque l'ensemble formé par le flotteur, le pointeau et l'organe de travail est repoussé axialement lors de la venue de l'organe de travail en butée contre un obstacle.

3. Dispositif selon la revendication 2, **caractérisé en ce que** les moyens de contact électrique (36, 37) comportent plusieurs contacts successifs (37) actionnables successivement par le flotteur (7).

4. Dispositif selon l'une quelconque des revendications précédentes, **caractérisé en ce qu'**il comporte en outre des moyens (21, 24) de positionnement angulaire mutuel du support de tête et de la tête interchangeable.

5. Dispositif selon l'une quelconque des revendications précédentes, **caractérisé en ce que** les moyens de suspension élastique comprennent une feuille (32) d'un matériau inextensible, présentant une relative déformabilité transversale, tendue entre le corps (22) de la tête, d'une part, et le pointeau et/ou l'organe de travail, d'autre part.

6. Dispositif selon la revendication 5, **caractérisé en ce que** les moyens de suspension élastique sont constitués par une feuille (32) en matériau synthétique inextensible et présentant une relative déformabilité transversale.

7. Dispositif selon l'une quelconque des revendications précédentes, **caractérisé en ce que** l'organe de travail est un organe de préhension d'objet (33) qui comprend une platine de saisie (34) solidaire de l'extrémité du pointeau (28) réalisé sous forme tubulaire, au moins une ventouse (35) disposée sur la face inférieure de la platine et au moins un canal (39) dans la platine pour relier ladite ventouse (35) au pointeau (28).

8. Dispositif selon la revendication 7, **caractérisé en ce que** la platine de saisie (34) est un plateau dont la forme est en conformité avec la forme de l'objet à déplacer et qui présente sur sa face inférieure une multiplicité de ventouses (35) reliées par des canaux respectifs (39) au susdit pointeau.

9. Dispositif selon l'une quelconque des revendications 2 à 6, **caractérisé en ce que** l'organe de travail est un doigt (40 ; 41 ; 42) de contact mécanique terminant le pointeau (28), ce grâce à quoi le dispositif, couplé avec des moyens de détermination de course, permet de mesurer l'épaisseur d'une pièce.

10. Dispositif selon l'une quelconque des revendications 1 à 6, **caractérisé en ce que** l'organe de travail est une seringue (43) propre à délivrer un produit coulant.

11. Dispositif selon la revendication 10, **caractérisé en ce qu'**il comporte
- une embase auxiliaire flottante (48) mécaniquement solidarisée à la susdite embase (3) du support de tête latéralement à celle-ci, ladite embase auxiliaire (48) comportant un conduit (49) raccordable à une source pneumatique sous pression,
- un corps auxiliaire (46) mécaniquement solidarisé au susdit corps (22) de la tête interchangeable latéralement à celle-ci, ledit corps auxiliaire (46) comportant un conduit (47) débouchant dans la partie supérieure de la seringue (43),
- et des moyens d'étanchéité (57, 58) pour assurer la liaison étanche entre le conduit de l'embase auxiliaire et le conduit du corps auxiliaire lorsque lesdits embase et corps auxiliaires sont assemblés,
ce grâce à quoi, il est possible de commander pneumatiquement le refoulement d'un produit coulant contenu dans la seringue (43).

12. Dispositif selon la revendication 11, **caractérisé en ce que** l'embase auxiliaire flottante (48) comporte en outre un conduit (50) raccordable à une source de vide et **en ce que** le corps auxiliaire (46) présente, en regard de l'orifice du conduit de vide l'embase auxiliaire, une portée d'appui étanche pour ledit orifice, de sorte que le corps auxiliaire (46) soit solidarisé à l'embase auxiliaire (48) en même temps que le susdit corps (22) l'est à la susdite embase (3).

## Patentansprüche

1. Pneumatische Tragevorrichtung für ein abnehmbares Arbeitsorgan, mit einem Kopfträger (1, 1₃) und einem austauschbaren Kopf (2, 2₁, 2₂, 2₃), **dadurch gekennzeichnet, dass**
a) der Kopfträger (1, 1₃) umfasst:
- ein an einem Träger befestigbares Fußstück (3),
- einen Schwimmer (7), der in einer zentralen axialen Bohrung (6) des Fußstücks (3) aufgenommen ist, in der er eine durch Endanschlagmittel (8, 9) begrenzte axiale Bewegungsfreiheit hat, wobei der Schwimmer (7) mit wenigstens einer axialen Leitung (10) versehen ist, die an eine pneumatische Druckquelle angeschlossen ist und auf eine Stirnseite des Schwimmers mündet,
- eine in eine Stirnseite (14) des Fußstücks (3) geschnittene Ringnut (15), die die Bohrung (6) umgibt und an eine Vakuumquelle anschließbar ist;
b) der austauschbare Kopf (2, 2₁, 2₂, 2₃) umfasst:
- einen Körper (22) mit einer Stirnseite (23), die eingerichtet ist, um mit der Stirnseite (14) des Fußstücks (3) des Kopfträgers (1, 1₃) zusammenzuwirken und in der eine ringförmige Zone entsprechend der Ringnut (15) des Fußstücks (3) des Kopfträgers vorgesehen ist,
- eine Nadel (28), die in einer zentralen axialen Bohrung (27) des Körpers (22) aufgenommen ist und eine begrenzte axiale Bewegungsfreiheit in der Bohrung hat, wobei die Nadel (28) in im wesentlichen koaxialer Entsprechung zu dem Schwimmer (7) angeordnet ist,
- ein von der Nadel (28) getragenes Arbeitsorgan (33-35; 40; 41; 42; 43) und
- elastische Aufhängungsmittel (32), die zwischen der Nadel und/oder dem Arbeitsorgan einerseits und dem Körper andererseits angeordnet sind und in der Lage sind, eine axiale Verschiebung der Nadel und des Arbeitsorgans zuzulassen, ihre Querverschiebung aber zu verhindern;
c) erste ringförmige Dichtungsmittel (13) zwischen dem Schwimmer (7) und der Nadel (28) angeordnet und von dem Schwimmer und/oder der Nadel getragen sind;
d) zweite ringförmige Dichtungsmittel (18) zwischen dem Fußstück (3) des Kopfträgers und dem Körper (22) des Kopfes angeordnet sind, beiderseits der Nut platziert und von dem Fußstück und/oder dem Körper getragen sind; und
e) Zentriermittel (19, 24) von dem Kopfträger und/oder dem Kopf getragen sind, um den Kopf koaxial zum Kopfträger zu positionieren, wenn er pneumatisch an letzteren gekoppelt ist.

2. Vorrichtung nach Anspruch 1, **dadurch gekennzeichnet, dass** elektrische Kontaktmittel (36, 37) in der zentralen Bohrung des Fußstücks vorgesehen sind, die eingerichtet sind, um von dem Schwimmer (7) betätigt zu werden, wenn die von dem Schwimmer, der Nadel und dem Arbeitsorgan gebildete Anordnung beim Anschlagen des Arbeitsorgans gegen ein Hindernis axial zurückgeschoben wird.

3. Vorrichtung nach Anspruch 2, **dadurch gekennzeichnet, dass** die elektrischen Kontaktmittel (36, 37) mehrere aufeinanderfolgende, der Reihe nach durch den Schwimmer betätigbare Kontakte umfassen.

4. Vorrichtung nach einem beliebigen der vorhergehenden Ansprüche, **dadurch gekennzeichnet, dass** sie ferner Mittel (21, 24) zum gegenseitigen Winkelpositionieren des Kopfträgers und des austauschbaren Kopfes umfasst.

5. Vorrichtung nach einem beliebigen der vorhergehenden Ansprüche, **dadurch gekennzeichnet, dass** die elastischen Aufhängungsmittel ein Blatt aus einem nicht dehnbaren Material umfassen, das eine relative Querverformbarkeit aufweist und zwischen dem Körper (22) des Kopf einerseits und der Nadel und/oder dem Arbeitsorgan andererseits gespannt ist.

6. Vorrichtung nach Anspruch 5, **dadurch gekennzeichnet, dass** die elastischen Aufhängungsmittel durch ein Blatt (32) aus synthetischem nicht dehnbaren Material gebildet sind, das eine relative Querverformbarkeit aufweist.

7. Vorrichtung nach einem beliebigen der vorhergehenden Ansprüche, **dadurch gekennzeichnet, dass** das Arbeitsorgan ein Objekt-Greiforgan (33) ist, das eine Greifplatine (34), die fest mit dem rohrförmig ausgebildeten Ende der Nadel (28) verbunden ist, wenigstens einen Saugnapf (35), der an der Unterseite der Platine (34) angebracht ist, und wenigstens einen Kanal (39) in der Platine zum Verbinden des Saugnapfs (35) mit der Nadel (28) umfasst.

8. Vorrichtung nach Anspruch 7, **dadurch gekennzeichnet, dass** die Greifplatine (34) eine Platte ist, deren Form mit der Form des zu bewegenden Objekts übereinstimmt und die an ihrer Unterseite eine Vielzahl von Saugnäpfen (35) aufweist, die mit der Nadel durch jeweilige Kanäle (39) verbunden sind.

9. Vorrichtung nach einem beliebigen der Ansprüche 2 bis 6, **dadurch gekennzeichnet, dass** das Arbeitorgan ein die Nadel abschließender mechanischer Kontaktfinger (40; 41; 42) ist, wodurch es die Vorrichtung, gekoppelt an eine Wegmesseinrichtung, erlaubt, die Dicke eines Werkstücks zu messen.

10. Vorrichtung nach einem beliebigen der Ansprüche 1 bis 6, **dadurch gekennzeichnet, dass** das Arbeitsorgan eine zum Abgeben eines fließfähigen Produkts geeignete Spritze ist.

11. Vorrichtung nach Anspruch 10, **dadurch gekennzeichnet, dass** sie umfasst:
- ein schwebendes Hilfs-Fußstück (48), das mit dem Fußstück (3) des Kopfträgers seitlich von diesem mechanisch fest verbunden ist, wobei das Hilfs-Fußstück (48) eine an eine pneumatische Druckquelle anschließbare Leitung (49) umfasst,
- einen Hilfskörper (46), der mit dem Körper (22) des austauschbaren Kopfs seitlich von diesem mechanisch fest verbunden ist, wobei der Hilfskörper (46) eine in den oberen Bereich der Spritze (43) mündende Leitung (47) umfasst, und
- Dichtungsmittel (57, 58) zum Gewährleisten der dichten Verbindung zwischen der Leitung des Hilfs-Fußstücks und der Leitung des Hilfskörpers, wenn Hilfs-Fußstück und Hilfskörper zusammengefügt sind;
wodurch es möglich ist, die Verdrängung eines in der Spritze enthaltenen fließfähigen Produkts pneumatisch zu steuern.

12. Vorrichtung nach Anspruch 11, **dadurch gekennzeichnet, dass** das schwebende Hilfs-Fußstück (48) ferner eine an eine Vakuumquelle anschließbare Leitung (50) umfasst, und dass der Hilfskörper (46) gegenüber der Öffnung der Vakuumleitung des Hilfs-Fußstücks einen dichten Andrückanschlag für die Öffnung aufweist, so dass der Hilfskörper mit dem Hilfs-Fußstück zur gleichen Zeit fest verbunden ist wie der Körper (22) mit dem Fußstück (3).

## Claims

1. A device for the pneumatic support of a removable working member, comprising a head support (1, 13) and an interchangeable head (2, 2₁, 2₂, 2₃),
**characterised in that**
a) the head support (11, 13) comprises:
- a base (3) fixable to a support,
- a float (7) sheltered in an axial central bore (6) of the said base (3) in which the said float is capable of an axial deflection limited by end stop means (8, 9), the said float (7) being provided at least with an axial conduit (10) connectable to a pressurised pneumatic source opening into a front face of the float, and
- an annular recess (15) cut in a front face (14) of the base (3), surrounding the said bore (6) and connectable to a vacuum source;
b) the interchangeable head (2, 2₁, 2₂, 2₃) comprises:
- a body (22) having a front face (23) adapted to cooperate with the above-mentioned front face (14) of the base (3) of the head support (1₁, 1₃) and in which is provided an annular zone corresponding with the said annular recess (15) of the base (3) of the head support,
- a centre punch (28) disposed in an axial central bore (27) of the said body (22) and suited for a limited axial deflection in the said bore, the said centre punch (28) being situated to correspond with perceptible coaxiality with the above-mentioned float (7),
- a working member (33-35; 40; 41; 42; 43) supported by the said centre punch, and
- elastic suspension means (32) interposed between the said centre punch and/or the working member, on the one hand, and the body, on the other hand, adapted to permit an axial displacement of the said centre punch and of the working member but to prevent their transversal displacement;
c) first annular sealing means (13) are placed between the float (7) and the centre punch (28) and are supported by the said float and/or the said centre punch;
d) second annular sealing means (18) are placed between the base (3) of the head support and the body (22) of the head and are situated on either side of the said recess, and are supported by the said base and/or by the said body; and
e) centring means (19, 24) are supported by the head support and/or by the head to position the head coaxially with the head support when it is pneumatically coupled to the latter.

2. A device according to Claim 1,
**characterised in that** electrical contact means (36, 37) are provided in the central bore of the base, which are designed to be actuated by the float (7) when the unit formed by the float, the centre punch and the working member is axially repelled when the working member comes to abut against an obstacle.

3. A device according to Claim 2,
**characterised in that** the electrical contact means (36, 37) comprise several successive contacts (37) which can be actuated successively by the float (7).

4. A device according to any one of the preceding Claims,
**characterised in that** it also comprises mutual angular positioning means for the head support and the interchangeable head.

5. A device according to any one of the preceding Claims,
**characterised in that** the elastic suspension means comprise a leaf (32) made from an inextensible material, having a transversal relative deformability, taut between the body (22) of the head, on the one hand, and the centre punch and/or the working member, on the other hand.

6. A device according to Claim 5,
**characterised in that** the elastic suspension means are formed by a leaf (32) made from an inextensible synthetic material and having transversal relative deformability.

7. A device according to any one of the preceding Claims,
**characterised in that** the working member is an object gripping member (33) which comprises a grasping plate (34) integral with the end of the centre punch (28) produced in tubular shape, at least one suction cup (35) disposed on the lower face of the plate and at least one duct (39) in the plate to connect the said suction cup (35) to the centre punch (28).

8. A device according to Claim 7,
**characterised in that** the grasping plate (34) is a plate whose shape conforms with the shape of the object to be moved and which has on its lower face a plurality of suction cups (35) connected by respective ducts (39) to the above-mentioned centre punch.

9. A device according to any one of Claims 2 to 6,
**characterised in that** the working member is a mechanical contact finger (40; 41; 42) which ends the centre punch (28), thanks to which the device, coupled to travel determining means, allows the thickness of a piece to be measured.

10. A device according to any one of Claims 1 to 6,
**characterised in that** the working member is a syringe (43) capable of supplying a fluid product.

11. A device according to Claim 10,
**characterised in that** it comprises
- a floating auxiliary base (48) mechanically attached to the above-mentioned base (3) of the head support laterally thereto, the said auxiliary base (48) comprising a conduit (49) connectable to a pressurised pneumatic source,
- an auxiliary body (46) mechanically attached to the above-mentioned body (22) of the interchangeable head laterally thereto, the said auxiliary body (46) comprising a conduit (47) opening into the upper part of the syringe (43),
- and sealing means (57, 58) to ensure the tight connection between the conduit of the auxiliary base and the conduit of the auxiliary body when the said base and the said auxiliary body are assembled,
thanks to which it is possible to control pneumatically the delivery of a fluid product contained in the syringe (43).

12. A device according to Claim 11,
**characterised in that** the floating auxiliary base (48) also comprises a conduit (50) connectable to a vacuum source
**and in that** the auxiliary body (46) has, opposite the orifice of the vacuum conduit, the auxiliary base, a bearing surface for the said orifice, so that the auxiliary body (46) is fixed to the auxiliary base (48) at the same time as the above-mentioned body (22) is fixed to the above-mentioned base (3).
